# EUROPÄISCHE PATENTSCHRIFT

(11) **EP 3 722 651 B1**
(45) Veröffentlichungstag und Bekanntmachung des Hinweises auf die Patenterteilung: **09.03.2022**
(21) Anmeldenummer: 19168398.6
(22) Anmeldetag: 10.04.2019
(51) Int. Cl.: F16P 3/14

(54) **DEFORMATIONSEINRICHTUNG UND VERFAHREN ZUM BETREIBEN EINER DEFORMATIONSEINRICHTUNG**
DEFORMATION DEVICE AND METHOD FOR OPERATING A DEFORMATION DEVICE
DISPOSITIF DE DÉFORMATION ET PROCÉDÉ DE FONCTIONNEMENT D'UN DISPOSITIF DE DÉFORMATION

(43) Veröffentlichungstag der Anmeldung: 14.10.2020
(73) Patentinhaber: Fiessler Elektronik GmbH & Co. KG, 73773 Aichwald (DE)
(72) Erfinder: Fiessler, Lutz, 73773 Aichwald (DE)
(74) Vertreter: Patentanwälte Magenbauer & Kollegen Partnerschaft mbB

(56) Entgegenhaltungen:
- EP-A1- 0 789 182
- EP-A1- 2 431 650
- EP-A1- 3 101 330
- EP-A1- 3 321 557
- US-B1- 10 197 219

## Beschreibung

Die Erfindung betrifft eine Deformationseinrichtung mit einem Maschinenrahmen, an dem ein Oberwerkzeug und ein Unterwerkzeug angeordnet sind, von denen wenigstens eines längs eines Bewegungswegs relativbeweglich am Maschinenrahmen aufgenommen ist, wobei einander gegenüberliegend angeordnete Stirnflächen des Oberwerkzeugs und des Unterwerkzeugs einen größenvariablen Arbeitsspalt ausbilden und wobei dem Oberwerkzeug oder dem Unterwerkzeug eine erste optische Sicherungseinrichtung zugeordnet ist, die zur Absicherung eines an den Arbeitsspalt angrenzenden, insbesondere quaderförmigen, ersten Sicherungsraums ausgebildet ist und die eine erste Strahlenquelle zur Bereitstellung von ersten Sicherungslichtstrahlen sowie einen ersten Lichtempfänger zum Empfang der ersten Sicherungslichtstrahlen umfasst, wobei die erste Strahlenquelle und der erste Lichtempfänger an einander gegenüberliegenden, insbesondere in vertikaler Richtung ausgerichteten, Begrenzungsflächen des ersten Sicherungsraums angeordnet sind und wobei dem Maschinenrahmen oder dem Oberwerkzeug eine zweite optische Sicherungseinrichtung zugeordnet ist, die eine zweite Strahlenquelle zur Bereitstellung von zweiten Sicherungslichtstrahlen sowie einen zweiten Lichtempfänger zum Empfang der zweiten Sicherungslichtstrahlen umfasst und die zur Absicherung eines, insbesondere quaderförmigen, zweiten Sicherungsraums ausgebildet ist, der einer größten Oberfläche des Oberwerkzeugs vorgelagert ist, so dass eine Projektion des zweiten Sicherungsraums auf das Oberwerkzeug zumindest einen Abschnitt des Oberwerkzeugs überdeckt, wobei die zweite Strahlenquelle und der zweite Lichtempfänger an einander gegenüberliegenden, insbesondere in vertikaler Richtung ausgerichteten, Begrenzungsflächen des zweiten Sicherungsraums angeordnet sind.

Aus der EP 3 321 557 A1 ist Deformationseinrichtung bekannt, die einen Maschinenrahmen aufweist, an dem ein Werkzeugpaar angeordnet ist, wobei eines der Werkzeuge längs eines Bewegungswegs relativbeweglich am Maschinenrahmen angeordnet ist und die Werkzeuge einen größenvariablen Arbeitsspalt ausbilden und wobei dem beweglichen Werkzeug eine erste optische Sicherungseinrichtung zugeordnet ist, die eine erste Strahlenquelle zur Bereitstellung eines ersten Strahlenbündels parallel zu den Stirnflächen der Werkzeuge und einen ersten Lichtempfänger zum Empfang des ersten Strahlenbündels umfasst und wobei einem der Werkzeuge eine zweite optische Sicherungseinrichtung zugeordnet ist, die eine zweite Strahlenquelle zur Bereitstellung eines zweiten Strahlenbündels und einen zweiten Lichtempfänger zum Empfang des zweiten Strahlenbündels zur Absicherung einer normal zum Bewegungsweg ausgerichteten, an die Stirnfläche anschließende Seitenfläche des Werkzeugs umfasst.

Die EP 0 789 182 A1 offenbart eine Sicherungseinrichtung für handbediente Werkzeugmaschinen, die mehrere Lichtschranken umfasst und die mit einer Steuereinrichtung der Maschine zusammenwirkt, wobei mehrere Lichtschranken zumindest in der durch den Bewegungsweg des bewegten Werkzeuges definierten Ebene mit parallel zueinander und parallel zur vorlaufenden Kante des bewegten Werkzeuges ausgerichteten Lichtstrahlen angeordnet sind und wobei jede Lichtschranke einzeln wirksam oder unwirksam schaltbar ist: Hierbei ist vorgesehe, daß die Sicherungseinrichtung in der Weise mit der Steuereinrichtung der Maschine zusammenwirkt, daß in Abhängigkeit von der momentanen Position des in Zustellrichtung bewegten Werkzeuges nur die noch nicht von dem bewegten Werkzeug und die nicht vom Werkstück und die nicht vom Gegenwerkzeug unterbrochenen Lichtschranken jeweils wirksam geschaltet sind.

Aus der US 10 197 219 B1 ist ein sekundärer Lichtvorhang zur Vermeidung von Verletzungen eines Bedieners einer Abkantpresse während der Bildung eines zweiten Flansches an einem Werkstück bekannt, wobei der Sekundärlichtvorhang das Eindringen des Bedieners in eine Quetschzone, d.h. den Bereich zwischen dem Stößel und der Vorderkante eines zuvor geformten Flansches detektiert. Um eine einfache Höhenverstellung des Sekundärlichtvorhangs zu ermöglichen, sind ein erster Montagewinkel mit einem länglichen Montageschlitz und ein damit zusammenwirkender zweiter Montagewinkel vorgesehen. Die Montagewinkel ermöglichen es, die sekundären Lichtvorhänge direkt an der Vorderseite oder Seite des Stößels zu montieren.

Die Aufgabe der Erfindung besteht darin, eine Deformationseinrichtung und ein Verfahren zum Betreiben einer Deformationseinrichtung bereitzustellen, mit denen eine vereinfachte Bedienung und verbesserte Absicherung der Deformationseinrichtung verwirklicht werden kann.

Diese Aufgabe wird gemäß einem ersten Erfindungsaspekt für eine Deformationseinrichtung der eingangs genannten Art mit den Merkmalen des Anspruchs 1 gelöst. Hierbei ist vorgesehen, dass die zweite Sicherungseinrichtung für eine Überwachung eines dritten Sicherungsraums ausgebildet ist, der sich nach unten über die dem Unterwerkzeug zugewandte Stirnfläche des Oberwerkzeugs hinaus längs des Bewegungswegs in Richtung des Unterwerkzeugs erstreckt, so dass eine Projektion des dritten Sicherungsraums auf den Arbeitsspalt zumindest einen Abschnitt des Arbeitsspalts überdeckt.

Die Aufgabe der ersten Sicherungseinrichtung besteht darin, den unmittelbar an die dem Unterwerkzeug zugewandte Stirnfläche des Oberwerkzeugs angrenzenden ersten Sicherungsraum zu überwachen, um während einer Annäherungsbewegung des Oberwerkzeugs an das Unterwerkzeug (oder einer Annäherungsbewegung des Unterwerkzeugs an das Oberwerkzeug) ein Eingreifen eines Bedieners in den sich verkleinernden Arbeitsspalt ermitteln zu können und zur Verhütung von Unfällen eine Abschaltung der Antriebseinrichtung für das jeweils relativbeweglich am Maschinenrahmen angebrachte Werkzeug aus der Gruppe: Oberwerkzeug, Unterwerkzeug, vorzunehmen. Ein derartiges System wird von der Anmelderin unter dem Produktnamen AKAS vertrieben und umfasst eine erste optische Sicherungseinrichtung, die zur Absicherung eines an den Arbeitsspalt angrenzenden, insbesondere quaderförmigen, ersten Sicherungsraums ausgebildet ist. Diese erste optische Sicherungseinrichtung umfasst eine erste Strahlenquelle zur Bereitstellung von ersten Sicherungslichtstrahlen sowie einen ersten Lichtempfänger zum Empfang der ersten Sicherungslichtstrahlen und kann auch als Lichtschranke oder Lichtgitter bezeichnet werden. Dabei wird der erste Sicherungsraum jeweils seitlich durch die erste Strahlenquelle und den ersten Lichtempfänger begrenzt, die einander gegenüberliegend angeordnet sind. Der erste Sicherungsraum kann in Abhängigkeit von der Ausgestaltung der ersten Strahlungsquelle und des ersten Lichtempfängers beispielhaft durch eine zwischen Strahlungsquelle und Lichtempfänger erstreckte, mit ovalem oder kreiszylindrischem oder rechteckigen oder quadratischen Querschnitt profilierte Hüllgeometrie beschrieben werden.

Die Aufgabe der zweiten optischen Sicherungseinrichtung besteht darin, einen, insbesondere quaderförmigen, zweiten Sicherungsraum zu überwachen, der einer größten Oberfläche oder Vorderseite des Oberwerkzeugs vorgelagert ist. Beim zweiten Sicherungsraum handelt es sich um einen dem Bediener zugewandten Raumabschnitt, in dem während eines Bearbeitungsvorgangs ein zwischen dem Oberwerkzeug und dem Unterwerkzeug aufzunehmendes Werkstück, das im Zuge eines Abkantvorgangs deformiert werden soll, eine Aufwärtsbewegung vollziehen kann und sich hierbei an eine dem Bediener zugewandte größte Oberfläche des Oberwerkzeugs annähert. Beispielsweise wird ein zu bearbeitendes Blechteil im Arbeitsspalt durch die Wechselwirkung des Oberwerkzeugs mit dem Unterwerkzeug abgeknickt, wodurch sich ein zunächst dem Bediener zugewandter Teilbereich des Werkstücks auf einer Kreisbahn in Richtung der größten Oberfläche des Oberwerkzeugs bewegt. Hierbei tritt die Gefahr auf, dass ein Bediener, der das Blechteil zum Zwecke der Stabilisierung ergreift, Quetschungen an den Händen erleidet. In diesem Raumabschnitt besteht somit eine Unfallgefahr, so dass zur Vermeidung von Unfällen eine Überwachung dieses Raumabschnitts, der auch als zweiter Sicherungsraum bezeichnet wird, mit Hilfe der zweiten optischen Sicherungseinrichtung vorgesehen ist. Der zweite Sicherungsraum ist vorzugsweise derart bemessen, dass eine Projektion des zweiten Sicherungsraums in einer Raumrichtung quer zum Bewegungsweg und vorzugsweise normal zur Vorderseite des Oberwerkzeugs sowie auf die Vorderseite des Oberwerkzeugs das Oberwerkzeug zumindest nahezu vollständig überdeckt.

Ferner nimmt die zweite optische Sicherungseinrichtung nunmehr weitere Aufgaben wahr, indem sie einen dritten Sicherungsraum überwacht, der sich nach unten über die dem Unterwerkzeug zugewandte Stirnfläche des Oberwerkzeugs hinaus längs des Bewegungswegs in Richtung des Unterwerkzeugs erstreckt. Dementsprechend überdeckt eine Projektion des dritten Sicherungsraums auf den Arbeitsspalt, also auf eine zwischen der dem Unterwerkzeug zugewandten Stirnfläche des Oberwerkzeugs und der dem Oberwerkzeug zugewandten Stirnfläche des Unterwerkzeugs erstreckte, den Arbeitsspalt überspannende Projektionsebene zumindest einen, insbesondere streifenförmigen, Abschnitt des Arbeitsspalts.

Eine erste Zielsetzung für die Überwachung des dritten Sicherungsraums besteht darin, eine vorgebbare Relativbewegung des jeweiligen beweglich am Maschinenrahmen angeordneten Werkzeugs aus der Gruppe: Oberwerkzeug, Unterwerkzeug auszulösen, ohne dass hierfür eine Betätigung eines Fußpedals oder eines Handschalters erforderlich ist. Vielmehr kann beispielhaft vorgesehen sein, dass ein Bediener ein zu bearbeitendes Werkstück in den Arbeitsspalt zuführt oder aus dem Arbeitsspalt entnimmt und hierbei eine Relativbewegung der Deformationseinrichtung auslöst.

Eine zweite Zielsetzung für die Überwachung des dritten Sicherungsraums besteht darin, eine vorgebbare Relativbewegung eines Werkstückanschlags, der relativ zum Unterwerkzeug bewegt werden kann, um eine Einlegetiefe für das Werkstück zu bestimmen, abzusichern. Hierbei soll vermieden werden, dass ein Bediener während einer (üblicherweise horizontalen) Bewegung des Werkstückanschlags in einen Raumbereich zwischen dem Unterwerkzeug und dem Werkstückanschlag eingreifen kann, da dort während der Verstellung des Werkstückanschlags eine Quetschgefahr zwischen dem Werkstückanschlag und dem Unterwerkzeug besteht.

Vorteilhafte Weiterbildungen der Erfindung sind Gegenstand der Unteransprüche.

Zweckmäßig ist es, wenn dem relativbeweglich am Maschinenrahmen angeordneten Oberwerkzeug und/oder dem relativbeweglich am Maschinenrahmen aufgenommen Unterwerkzeug eine Antriebseinrichtung zur Einleitung einer Relativbewegung längs des Bewegungswegs zugeordnet ist, wobei die Antriebseinrichtung und die erste Sicherungseinrichtung und die zweite Sicherungseinrichtung mit einer Sicherheitssteuerung verbunden sind, die für eine Ansteuerung und Abschaltung der Antriebseinrichtung in Abhängigkeit von Signalen der ersten Sicherungseinrichtung und der zweiten Sicherungseinrichtung ausgebildet ist, wobei die Sicherheitssteuerung für eine Ansteuerung der Antriebseinrichtung zur Durchführung einer Abstandsverkleinerung von Oberwerkzeug und Unterwerkzeug bei Vorliegen eines vorgebbaren Abstands zwischen Oberwerkzeug und Unterwerkzeug und bei Eindringen eines Gegenstands in den dritten Sicherungsraum ausgebildet ist.

Beispielhaft ist die Antriebseinrichtung als elektrischer Direktantrieb, als elektrischer Getriebeantrieb oder als elektrohydraulischer Antrieb ausgebildet und stellt eine Linearbewegung für das Oberwerkzeug und/oder das Unterwerkzeug längs des Bewegungswegs zur Verfügung. Hierfür umfasst die Antriebseinrichtung insbesondere einen Elektromotor, der elektrisch mit einer Sicherheitssteuerung verbunden ist, die beispielhaft als speicherprogrammierbare Steuerung (SPS) ausgebildet sein kann.

Die Sicherheitssteuerung ist für eine sicherheitsgerichtete Ansteuerung der Antriebseinrichtung ausgebildet und umfasst hierzu geeignete Schaltmittel, beispielsweise für eine zweikanalige Abschaltung der Energiezufuhr für die Antriebseinrichtung. Um eine Entscheidung darüber zu treffen, ob eine sicherheitsgerichtete Abschaltung der Antriebseinrichtung erforderlich ist, ist die Sicherheitssteuerung elektrisch mit der ersten optischen Sicherungseinrichtung und mit der zweiten optischen Sicherungseinrichtung verbunden und für einen Empfang von Sensorsignalen ausgebildet, die von der ersten optischen Sicherungseinrichtung und von der zweiten optischen Sicherungseinrichtung bereitgestellt werden. Vorzugsweise ist vorgesehen, dass eine Verarbeitung der einzelnen Sensorsignale, die beispielsweise von Sensoren der jeweiligen optischen Sicherungseinrichtung bereitgestellt werden, lokal in der jeweiligen optischen Sicherungseinrichtung vorgenommen wird, da hier eine unmittelbar auf diese Verarbeitungsaufgabe optimierte Schaltungseinrichtung vorgesehen werden kann. In diesem Fall gibt die jeweilige optische Sicherungseinrichtung nur dann ein Sensorsignal an die Sicherheitssteuerung aus, wenn eine vorgebbare Abschwächung der Sicherungslichtstrahlen vorliegt.

Wahlweise können die optischen Sicherungseinrichtung und/oder die Sicherheitssteuerung dazu ausgebildet sein, eine bereichsweise Abschaltung der ersten optischen Sicherungseinrichtung und/oder der zweiten optischen Sicherungseinrichtung in Abhängigkeit von einer vorgebbaren Vorgehensweise (Ausblendung) vorzunehmen, um einen planmäßigen Ablauf eines Deformationsvorgangs für ein Werkstück nicht durch vorhersehbare Unterbrechungen von Sicherungslichtstrahlen der ersten optischen Sicherungseinrichtung und/oder der zweiten optischen Sicherungseinrichtung zu unterbrechen.

Darüber hinaus kann die Sicherheitssteuerung für eine Abfrage der zweiten optischen Sicherungseinrichtung im Bezug auf den dritten Sicherungsraum ausgebildet sein, um anhand von Unterbrechungen von Sicherungslichtstrahlen innerhalb des dritten Sicherungsraums oder anhand eines daraus resultierenden Sensorsignals der zweiten optischen Sicherungseinrichtung erkennen zu können, ob eine ordnungsgemäße Zufuhr eines Werkstücks in Richtung des Arbeitsspalts innerhalb des dritten Sicherungsraums erfolgt oder eine Entnahme eines Werkstücks aus dem Arbeitsspalt erfolgt und hierbei Sicherungslichtstrahlen innerhalb des dritten Sicherungsraums unterbrochen werden. Zur Vereinfachung einer Verarbeitung von Sensorsignalen, die in der zweiten optischen Sicherungseinrichtung von den dort vorgesehenen Sensoren in Abhängigkeit von den eintreffenden Sicherungslichtstrahlen bereitgestellt werden, ist es vorzugsweise vorgesehen, dass innerhalb der zweiten optischen Sicherungseinrichtung keine Unterscheidung zwischen dem zweiten Sicherungsraum und dem dritten Sicherungsraum vorgenommen wird. Vielmehr erfolgt stets eine Verarbeitung aller Sensorsignale, die in der zweiten optischen Sicherungseinrichtung von den dort vorgesehenen Sensoren bereitgestellt werden.

Exemplarisch kann vorgesehen sein, dass bei einem Eindringen eines Gegenstands, insbesondere bei einer Zufuhr eines Werkstücks, in den Auslöseabschnitt des dritten Sicherungsraums eine Ansteuerung der Antriebseinrichtung durch die Sicherheitssteuerung erfolgt, sofern anhand einer ausreichend großen Abschwächung der Sicherungslichtstrahlen der zweiten optischen Sicherungseinrichtung ermittelt werden kann, dass das Werkstück in den dritten Sicherungsraum eingebracht wird. In diesem Fall wird davon ausgegangen, dass eine Deformationsbewegung durch Verkleinerung des Arbeitsspalts zwischen dem Oberwerkzeug und dem Unterwerkzeug gewünscht ist, so dass diese Deformationsbewegung ohne eine Betätigung eines Fußpedals oder eines Handschalters durchgeführt werden kann.

Alternativ kann vorgesehen sein, dass eine Deformationsbewegung durch Verkleinerung des Arbeitsspalts zwischen dem Oberwerkzeug und dem Unterwerkzeug erst dann ausgelöst wird, wenn zunächst ein Eindringen eines Gegenstands in den dritten Sicherungsraum und ein nachfolgendes Entfernen des Gegenstands aus dem dritten Sicherungsraum stattfindet. Bei dieser Art der Auslösung der Deformationsbewegung wird beispielhaft davon ausgegangen, dass ein Bediener ein Werkstück gegriffen hat und in den dritten Sicherungsraum einbringt, wobei er mit seinen Händen eine Abschwächung der Sicherheitslichtstrahlen im dritten Sicherungsraum bewirkt, die von der zweiten optischen Sicherungseinrichtung als Eindringen eines Gegenstands in den dritten Sicherungsraum detektiert wird. Nachdem der Bediener das Werkstück im Arbeitsspalt platziert hat, kann er das Werkstück loslassen, was als Entfernen eines Gegenstands aus dem dritten Sicherungsraum detektiert wird, so dass anschließend die gewünschte Deformationsbewegung ausgelöst werden kann.

In weiterer Ausgestaltung der Erfindung ist vorgesehen, dass die Sicherheitssteuerung für eine Abschaltung der Antriebseinrichtung während einer Abstandsverkleinerung von Oberwerkzeug und Unterwerkzeug bei Eindringen eines Gegenstands in den ersten Sicherungsraum oder in den zweiten Sicherungsraum. Bei einem Eindringen eines Gegenstands in den ersten oder zweiten Sicherungsraum wird davon ausgegangen, dass es sich hierbei um eine Gefährdungssituation handelt, so dass entweder eine unmittelbare Abschaltung der Antriebseinrichtung oder eine Umschaltung einer Arbeitsrichtung für die Antriebseinrichtung vorgesehen ist.

Ergänzend oder alternativ kann vorgesehen sein, dass die Sicherheitssteuerung für eine Abschaltung eines Stellantriebs ausgebildet ist, mit dem ein Abstand zwischen dem Unterwerkzeug und einem, insbesondere horizontal verstellbaren, Werkstückanschlag eingestellt wird. Eine Ansteuerung des Stellantriebs kann beispielsweise dann erfolgen, wenn die Antriebseinrichtung deaktiviert ist und eine Überwachung des dritten Sicherungsraums durch die zweite optische Sicherungseinrichtung erfolgt. Bei einem Eindringen eines Gegenstands in den dritten Sicherungsraum wird davon ausgegangen, dass es sich hierbei um eine Gefährdungssituation handelt, bei der ein Bediener einer Quetschgefahr aufgrund einer Abstandsverringerung zwischen dem Werkstückanschlag und dem Unterwerkzeug ausgesetzt ist, so dass entweder eine unmittelbare Abschaltung des Stellantriebs oder eine Umschaltung einer Arbeitsrichtung für den Stellantrieb vorgesehen ist.

Vorzugsweise ist vorgesehen, dass das Oberwerkzeug relativbeweglich am Maschinenrahmen aufgenommen ist, dass die erste optische Sicherungseinrichtung am Oberwerkzeug angeordnet ist und dass die zweite optische Sicherungseinrichtung am Maschinenrahmen angeordnet ist. Bei dieser Konfiguration erstreckt sich die zweite optische Sicherungseinrichtung vorzugsweise von einer höchsten Position, die eine Oberkante des Oberwerkzeugs bei vollständig geöffnetem Arbeitsspalt einnehmen kann, in vertikaler Richtung nach unten zumindest bis zu der dem Oberwerkzeug zugewandten Stirnfläche des Unterwerkzeugs.

Alternativ ist vorgesehen, dass das Oberwerkzeug relativbeweglich am Maschinenrahmen aufgenommen ist, dass die erste Sicherungseinrichtung am Oberwerkzeug angeordnet ist und dass die zweite Sicherungseinrichtung an der ersten Sicherheitseinrichtung angeordnet ist.

Bei einer vorteilhaften Weiterbildung der Erfindung ist vorgesehen, dass zwischen dem Oberwerkzeug und der ersten Sicherungseinrichtung eine Einstelleinrichtung angeordnet ist, die für eine Einstellung einer Position der ersten Sicherungseinrichtung gegenüber dem Oberwerkzeug längs des Bewegungswegs ausgebildet ist. Hierdurch wird eine Anpassung einer Position der ersten optischen Sicherungseinrichtung bezüglich einer dem Unterwerkzeug zugewandten Stirnfläche des Oberwerkzeugs ermöglicht, da unterschiedliche Oberwerkzeuge auch unterschiedliche Auszählungen in der Bewegungsrichtung aufweisen können.

Zweckmäßig ist es, wenn die erste optische Sicherungseinrichtung und die zweite optische Sicherungseinrichtung für eine Absicherung einer bedienerzugewandten Vorderseite des Oberwerkzeugs und/oder des Unterwerkzeugs ausgebildet sind.

Die Aufgabe der Erfindung wird gemäß einem zweiten Erfindungsaspekt durch ein Verfahren zum Betreiben einer Deformationseinrichtung gelöst, das die folgenden Schritte umfasst: Überwachen eines ersten Sicherungsraums, der angrenzend an einen von einander gegenüberliegend angeordneten Stirnflächen eines Oberwerkzeugs und eins Unterwerkzeugs ausgebildeten größenvariablen Arbeitsspalt angeordnet ist, mit einer ersten optischen Sicherungseinrichtung, wobei die Überwachung des ersten Sicherungsraums während einer Abstandsverkleinerung zwischen dem Oberwerkzeug und dem Unterwerkzeug innerhalb eines vorgebbaren ersten Abstandsintervalls für einen Abstand zwischen dem Oberwerkzeug und dem Unterwerkzeug erfolgt und wobei die Abstandsverkleinerung bei einem Eindringen eines Gegenstands in den ersten Sicherungsraum beendet wird; Überwachen eines zweiten Sicherungsraums, der einer größten Oberfläche des Oberwerkzeugs vorgelagert ist und der bei einer Projektion quer zum Bewegungsweg eine größte Oberfläche des Oberwerkzeugs zumindest teilweise überdeckt, mit einer zweiten optischen Sicherungseinrichtung, wobei die Überwachung des zweiten Sicherungsraums während einer Abstandsverkleinerung zwischen dem Oberwerkzeug und dem Unterwerkzeug innerhalb eines vorgebbaren zweiten Abstandsintervalls für einen Abstand zwischen dem Oberwerkzeug und dem Unterwerkzeug erfolgt und wobei die Abstandsverkleinerung bei einem Eindringen eines Gegenstands in den zweiten Sicherungsraum beendet wird; Überwachen eines dritten Sicherungsraums, der dem Arbeitsspalt vorgelagert ist und der den Arbeitsspalt bei einer Projektion quer zum Bewegungsweg zumindest teilweise überdeckt, mit der zweiten optischen Sicherungseinrichtung, wobei die Überwachung des dritten Sicherungsraums während einer Stillstandsphase für das Oberwerkzeug und das Unterwerkzeug erfolgt und wobei eine Abstandsveränderung zwischen dem Oberwerkzeug und dem Unterwerkzeug eingeleitet wird, wenn ein Gegenstand in den dritten Sicherungsraum eindringt oder nach einem Eindringen in den dritten Sicherungsraum den dritten Sicherungsraum verlässt und/oder wobei eine Abstandsveränderung zwischen einem Werkstückanschlag gegenüber dem Oberwerkzeug oder dem Unterwerkzeug beendet wird, wenn ein Gegenstand in den dritten Sicherungsraum eindringt.

Bevorzugt ist das erste Abstandsintervall derart bemessen, dass der Abstand zwischen dem Oberwerkzeug und dem Unterwerkzeug größer als eine Summe aus einem Bremsweg für das Oberwerkzeug aus einer hohen, auch als Schnellgang bezeichneten, insbesondere maximalen, Annäherungsgeschwindigkeit für das Oberwerkzeug an das Unterwerkzeug und der in der Sicherheitssteuerung hinterlegten Dicke des Werkstücks ist. Sobald der Abstand zwischen dem Oberwerkzeug und dem Unterwerkzeug gleich oder kleiner als diese Summe ist, findet üblicherweise eine Umschaltung der Antriebseinrichtung auf eine deutlich langsamere, auch als Schleichgang bezeichnete, Annäherungsgeschwindigkeit zwischen Oberwerkzeug und Unterwerkzeug statt, bei der davon ausgegangen wird, dass hierdurch keine Gefährdung für den Bediener vorliegt.

Bevorzugt ist das zweite Abstandsintervall derart bemessen, dass der Abstand zwischen dem Oberwerkzeug und dem Unterwerkzeug gleich oder kleiner als die Dicke des Werkstücks ist, so dass die Überwachung des zweiten Sicherungsraums während des eigentlichen Deformationsvorgangs (insbesondere Abkantvorgangs) für das Werkstück vorgenommen wird.

In weiterer Ausgestaltung des Verfahrens ist vorgesehen, dass eine Abstandsverkleinerung zwischen dem Oberwerkzeug und dem Unterwerkzeug bei Eindringen eines Gegenstands in den dritten Sicherungsraum nur dann eingeleitet wird, wenn ein Abstand zwischen dem Oberwerkzeug und dem Unterwerkzeug innerhalb eines vorgebbaren dritten Abstandsintervalls liegt.

Bevorzugt ist eine Untergrenze des dritten Abstandsintervalls größer als eine Untergrenze des ersten Abstandsintervalls, um eine vorteilhafte Zuführung des Werkstücks in den Arbeitsspalt zu ermöglichen.

In weiterer Ausgestaltung des Verfahrens ist vorgesehen, dass eine Abstandsverkleinerung zwischen dem Oberwerkzeug und dem Unterwerkzeug bei Eindringen eines Gegenstands in den dritten Sicherungsraum nur dann eingeleitet wird, wenn ein Abstand zwischen dem Oberwerkzeug und dem Unterwerkzeug innerhalb eines vorgebbaren vierten Abstandsintervalls liegt. Hierdurch wird gewährleistet, dass nach dem Zuführen des Werkstücks in den dritten Sicherungsraum und dem Beginn der Annäherungsbewegung zwischen dem Oberwerkzeug und dem Unterwerkzeug noch ausreichend Zeit verbleibt, um das Werkstück in die für den Deformationsvorgang korrekte Position gegenüber dem Oberwerkzeug und dem Unterwerkzeug zu bringen.

In weiterer Ausgestaltung des Verfahrens ist vorgesehen, dass ein kleinster Abstandsbetrag des ersten Abstandsintervalls (untere Intervallgrenze) größer oder gleich einem größten Abstandsbetrag des zweiten Abstandsintervalls (obere Intervallgrenze) ist. Somit wird festgelegt, dass eine Überwachung des zweiten Sicherungsraums erst dann vorgenommen wird, wenn eine Überwachung des ersten Sicherungsraums aufgrund der erfolgten Annäherung zwischen Oberwerkzeug und Unterwerkzeug nicht fortgesetzt wird. Dementsprechend steht die zunächst für die Überwachung des ersten Sicherungsraums in der Sicherheitssteuerung nach Passieren der unteren Intervallgrenze des ersten Abstandsintervalls für die Überwachung des zweiten Sicherungsraums zu Verfügung.

In weiterer Ausgestaltung des Verfahrens ist vorgesehen, dass ein kleinster Abstandsbetrag des dritten Abstandsintervalls größer oder gleich einem größten Abstandsbetrag des zweiten Abstandsintervalls ist.

In weiterer Ausgestaltung des Verfahrens ist vorgesehen, dass das vierte Abstandsintervall gleich dem zweiten Abstandsintervall ist.

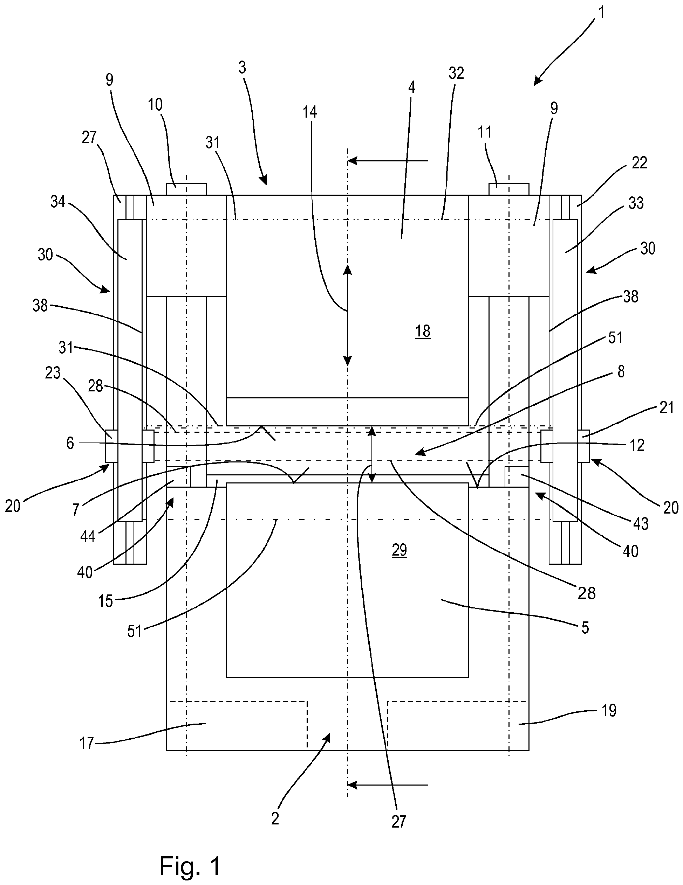

Eine vorteilhafte Ausführungsform der Erfindung ist in der Zeichnung dargestellt. Hierbei zeigt:
- Figur 1: eine Vorderansicht einer Deformationseinrichtung mit zwei optischen Sicherungseinrichtungen, deren Komponenten jeweils beidseitig am Maschinenrahmen angeordnet sind,
- Figur 2: eine seitliche Schnittdarstellung der Deformationseinrichtung gemäß der Figur 1, und
- Figur 3: eine schematische Draufsicht auf die Deformationseinrichtung.
Eine in den Figuren 1 bis 3 rein schematisch dargestellte Deformationseinrichtung 1 umfasst einen Maschinenrahmen 2, an dem ein Werkzeugpaar 3 angeordnet ist. Die Deformationseinrichtung 1 ist rein exemplarisch als Abkantpresse ausgebildet und ermöglicht eine Deformation von Blechteilen, beispielhaft durch Abwinklung zwischen einem Oberwerkzeug 4 und einem Unterwerkzeug 5 des Werkzeugpaars 3. Exemplarisch sind sowohl das Oberwerkzeug 4 als auch das Unterwerkzeug 5 jeweils als Planparallelplatte ausgebildet, die an einander gegenüberliegenden Stirnflächen 6, 7 mit einer korrespondierenden Profilierung versehen sind. Die beiden Stirnflächen 6, 7 des Oberwerkzeugs 4 und des Unterwerkzeugs 5 begrenzen eine vertikale Ausdehnung des größenvariablen Arbeitsspalts 8 des Werkzeugpaars 3 und bestimmen dabei einen Abstand 27.

Beispielhaft ist vorgesehen, dass das Unterwerkzeug 5 ortsfest am Maschinenrahmen 2 festgelegt ist, während das Oberwerkzeug 4 beweglich am Maschinenrahmen 2 aufgenommen ist und hierzu mittels eines Werkzeughalters 9 an zwei höhenverstellbar am Maschinenrahmen 2 gelagerten Tragsäulen 10, 11 festgelegt ist. Beispielhaft handelt es sich bei den Tragsäulen 10, 11 um Kolbenstangen von Hydraulikzylindern, die im Maschinenrahmen 2 untergebracht sind und die eine Verstellung einer Vertikalposition des Oberwerkzeugs 4 längs eines Bewegungswegs 14 ermöglichen, der rein exemplarisch in vertikaler Richtung ausgerichtet ist. Wie aus der Darstellung der Figur 1 entnommen werden kann, sind das Oberwerkzeug 4 und das Unterwerkzeug 5 mit einer geringeren Breite als der Maschinenrahmen 2 ausgeführt.

Bei einer nicht dargestellten Ausführungsform sind beide Werkzeuge höhenverstellbar ausgebildet. Bei einer ebenfalls nicht dargestellten Ausführungsform ist nur das Unterwerkzeug höhenverstellbar ausgebildet.

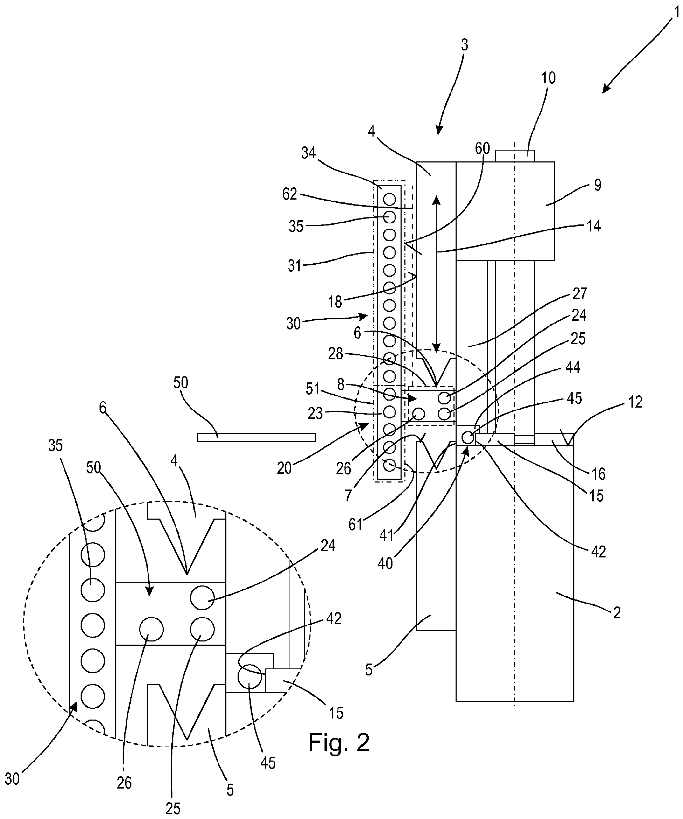

Ein an einer Oberseite 12 des Maschinenrahmens 2 angeordneter, rein exemplarisch balkenförmig dargestellter Werkstückanschlag 15 kann mit Hilfe einer beweglichen Kolbenstange 16 eines kompakt ausgebildeten, exemplarisch als Stellantrieb dienenden Hydraulikzylinders an den Arbeitsspalt 8 angenähert bzw. von diesem entfernt werden, um als Tiefenanschlag für ein in einem Rohzustand vor einer Deformation plattenförmiges Werkstück 50 zu dienen, wie es in der Figur 2 dargestellt ist.

Die Deformationseinrichtung 1 ist gemäß den Darstellungen der Figuren 1 und 2 mit insgesamt drei optischen Sicherungseinrichtungen 20, 30, 40 ausgestattet, die nachstehend näher erläutert werden. Jede der drei optischen Sicherungseinrichtungen 20, 30, 40 ist zur Überwachung eines vorgebbaren, insbesondere zylindrischen oder quaderförmigen, Raumabschnitts ausgebildet, in dem ein Eingreifen eines Bedieners zumindest während bestimmter Betriebsphasen der Deformationseinrichtung 1 zu einer Gefährdung des Bedieners führen würde.

Bei dem nicht dargestellten Bediener wird davon ausgegangen, dass dieser sich während eines bestimmungsgemäßen Gebrauchs der Deformationseinrichtung 1 ausschließlich in einem Raumbereich aufhält, der der Deformationseinrichtung 1 vorgelagert ist und der sich an diejenigen Vorderseiten 18, 29 des Oberwerkzeugs 4 und des Unterwerkzeugs 5 anschließt, die dem Werkzeughalter 9 bzw. dem Maschinenrahmen 2 abgewandt sind. Beispielhaft kann vorgesehen sein, dass ein dem Bediener abgewandter Raumbereich hinter der Deformationseinrichtung 1 durch eine nicht näher dargestellte Abschrankung abgesichert ist. Da jedoch nicht ausgeschlossen werden kann, dass der Bediener während des bestimmungsgemäßen Gebrauchs der Deformationseinrichtung durch Handhabung von Werkstücken 50 in Gefährdungsbereiche gelangt, die insbesondere bei einer Annäherungsbewegung des Oberwerkzeugs 4 an das Unterwerkzeug 5 im Arbeitsspalt 8 und ggf. zusätzlich bei einer hierbei stattfindenden Annäherung eines Bereichs des Werkstücks 50 an eine Vorderseite 18 des Oberwerkzeugs 4 zwischen Werkstück 50 und der Vorderseite 18 des Oberwerkzeugs 4 entstehen, sind die optischen Sicherungseinrichtungen 20, 30 und 40 vorgesehen.

Die erste optische Sicherungseinrichtung 20 ist zur Überwachung eines dem Arbeitsspalt 8 vorgelagerten, rein exemplarisch mit einer rechteckigen Profilierung (in den Figuren 1 und 2 mit gestrichelter Linie) dargestellten ersten Sicherungsraums 28 ausgebildet und umfasst eine erste Strahlenquelle 21, die rein exemplarisch zur Bereitstellung von insgesamt drei nicht näher dargestellten Lichtstrahlen, insbesondere Laserstrahlen, ausgebildet ist. Die Lichtstrahlen der Strahlenquelle 21 sind zumindest im Wesentlichen parallel zu längsten Kanten der Stirnflächen 6, 7 des Oberwerkzeugs 4 und des Unterwerkzeugs 5 ausgerichtet.

Die erste Strahlenquelle 21 ist an einer Stelleinrichtung 22 angekoppelt, die beispielhaft als nicht näher dargestellter, elektrisch betreibbare Gewindespindelantrieb ausgebildet ist und eine Veränderung einer vertikalen Positionierung der ersten Strahlenquelle 21 relativ zum Werkzeughalter 9 und dem daran angebrachten Oberwerkzeug 4 ermöglicht. Da die Stelleinrichtung 22 mit dem Werkzeughalter 9 gekoppelt ist, vollzieht die erste Strahlenquelle 21 stets die Bewegung des Werkzeughalters 9, sofern nicht eine gleichsinnige oder gegensinnige Bewegungsüberlagerung durch eine entsprechende Ansteuerung der Stelleinrichtung 22 stattfindet.

Die Stelleinrichtung 22 ist mit einer rein schematisch dargestellten Sicherheitssteuerung 17, die beispielhaft als separate Komponente ausgebildet ist, jedoch auch in der ersten optischen Sicherungseinrichtung 20 integriert sein kann, in nicht näher dargestellter Weise elektrisch verbunden, wobei die Sicherheitssteuerung für eine Einstellung einer Position der ersten Strahlenquelle 21 relativ zum Werkzeugträger 3 und dem daran angebrachten Oberwerkzeug 4 ausgebildet ist.

Gegenüberliegend zur ersten Strahlenquelle 21 ist ein erster Lichtempfänger 23 angeordnet, der rein exemplarisch drei Sensorelemente 24, 25 und 26 umfasst. Jedes der Sensorelemente 24, 25 und 26 ist zum Empfang eines korrespondierenden, von der ersten Strahlenquelle 21 bereitgestellten und nicht näher dargestellten Lichtstrahls ausgebildet. Um stets eine Positionierung des ersten Lichtempfängers 23 gegenüberliegend zur ersten Strahlenquelle 21 zu gewährleisten, ist der erste Lichtempfänger 23 in gleicher Weise wie die erste Strahlenquelle 21 an einer Stelleinrichtung 27 angebracht, die in nicht näher dargestellter Weise elektrisch mit der Sicherheitssteuerung 17 verbunden ist und von der Sicherheitssteuerung 17 synchron zur Stelleinrichtung 22 angesteuert werden kann.

Ferner sind sowohl die erste Strahlenquelle 21 als auch der erste Lichtempfänger 23 elektrisch in nicht näher dargestellter Weise mit der Sicherheitssteuerung 17 verbunden, die einerseits eine selektive Ansteuerung der nicht näher dargestellten Lichtquellen der ersten Strahlenquelle 21 und andererseits eine Auswertung von Sensorsignalen der Sensorelemente 24, 25, 26 des ersten Lichtempfängers 23 vornimmt. Alternativ wird die Auswertung von Sensorsignalen der ersten Lichtempfänger 23 und eine eventuelle zeitweilige Nichtbeachtung von Sensorsignalen einzelner Sensorelemente 24, 25, 26 oder von Gruppen von Sensorelementen 24, 25, 26 (Ausblendung) direkt in der ersten optischen Sicherungseinrichtung 20 vorgenommen.

Ferner ist die Sicherheitssteuerung 17 für eine nachstehend näher beschriebene Einflussnahme auf die Bewegung des Oberwerkzeugs 4 ausgebildet.

Die zweite optische Sicherungseinrichtung 30 ist zur Überwachung eines rein schematisch (in den Figuren 1 und 2 mit gestrichelter Doppelpunkt-Linie) dargestellten zweiten Sicherheitsraums 31 vorgesehen, der eine quaderförmige Gestalt aufweist und der sich mit einer größten Oberfläche 60 parallel zu der dem Bedienerbereich zugewandten Vorderseite 18 des Oberwerkzeugs 4 erstreckt. Dabei verläuft rein exemplarisch eine Kante 32 der größten Oberfläche 60 des Sicherheitsraums 31 in horizontaler Richtung zwischen einer zweiten Strahlenquelle 33 und einem zweiten Lichtempfänger 34, während sich eine Seitenkante 38 der größten Oberfläche des zweiten Sicherheitsraums 31 in vertikaler Richtung parallel zum Bewegungsweg 14 erstreckt. Beispielhaft ist vorgesehen, dass eine rein schematisch in der Figur 2 dargestellte Projektion 62 des zweiten Sicherungsraums 31 auf die Vorderseite 18 des Oberwerkzeugs 4 das Oberwerkzeug 4 zumindest nahezu vollständig überdeckt.

Der in der Figur 2 dargestellte zweite Lichtempfänger 34 grenzt an eine Schmalseite des zweiten Sicherheitsraums 31, deren Oberfläche von der Seitenkante des zweiten Sicherheitsraums 31 sowie von einer horizontal verlaufenden Oberkante sowie einer horizontal verlaufenden Unterkante des zweiten Sicherheitsraums 31 begrenzt wird.

Ferner ist die zweite optische Sicherungseinrichtung 30 zur Überwachung eines dritten Sicherheitsraums 51 vorgesehen, der in den Figuren 1 und 2 mit gestrichelter Punkt-Linie dargestellt ist und beispielhaft an den zweiten Sicherungsraum 51 angrenzt und sich unmittelbar in vertikaler Richtung nach unten an den zweiten Sicherungsraum 31 anschließt und in gleicher Weise wie der zweite Sicherungsraum 31 eine quaderförmige Gestalt aufweist. Der dritte Sicherungsraum 51 erstreckt sich somit mit einer größten Oberfläche 61 parallel zu der dem Bedienerbereich zugewandten Vorderseite 29 des Unterwerkzeugs 5.

Die zweite Strahlenquelle 33 ist zur Bereitstellung eines Lichtgitters oder Lichtvorhangs in Richtung des zweiten Lichtempfängers 34 ausgebildet. Die Lichtstrahlen der zweiten Strahlenquelle 33 durchsetzen den zweiten Sicherheitsraum 31 und den dritten Sicherungsraum 51 derart, dass für jeden Raumvolumenabschnitt des zweiten Sicherheitsraums 31 und des dritten Sicherungsraums 51 gewährleistet ist, dass ein Eindringen eines Fingers oder einer Hand eines Bedieners eine Abschwächung der von den zeilenartig angeordneten Sensorelementen 35 des zweiten Lichtempfängers empfangenen Lichtstrahlen bewirkt, die sich in einem signifikant veränderten Sensorsignal des Lichtempfängers 34 bemerkbar macht.

Für eine Auswertung des Sensorsignals ist der zweite Lichtempfänger 34 mit der Sicherheitssteuerung 17 in nicht näher dargestellter Weise elektrisch verbunden. Ferner ist auch die zweite Strahlenquelle 33 mit der Sicherheitssteuerung 17 in nicht näher dargestellter Weise elektrisch verbunden, um eine selektive Bereitstellung oder Abschaltung der Lichtstrahlen, die den Sicherheitsraum 31 durchsetzen sollen, zu ermöglichen. Alternativ wird die Auswertung von Sensorsignalen der Sensorelemente 35 und eine eventuelle zeitweilige Nichtbeachtung von Sensorsignalen einzelner Sensorelemente 35 oder von Gruppen von Sensorelementen 35 (Ausblendung) direkt in der zweiten optischen Sicherungseinrichtung 20 vorgenommen.

Beispielhaft ist vorgesehen, dass die erste optische Sicherungseinrichtung 20 und die zweite optische Sicherungseinrichtung 30 den ersten Sicherungsraum 28 und den zweiten Sicherungsraum 31 während einer Bewegung des Oberwerkzeugs 4 relativ zum Unterwerkzeug 5 überwachen, um ein Gefährdungspotenzial durch die Annäherungsbewegung zwischen dem Oberwerkzeug 4 und dem Unterwerkzeug 5 und eine eventuelle Annäherungsbewegung zwischen einem Abschnitt des Werkstücks 50 und der Vorderseite 18 des Oberwerkzeugs 4 für einen nicht dargestellten Bediener zu reduzieren bzw. auszuschließen. Ferner ist exemplarisch vorgesehen, dass die zweite optische Sicherungseinrichtung 30 eine Überwachung des dritten Sicherungsraums 51 insbesondere dann vornimmt, wenn keine Relativbewegung zwischen dem Oberwerkzeug 4 und dem Unterwerkzeug 5 vorliegt.

Vorzugsweise ist vorgesehen, dass die zweite optische Sicherungseinrichtung 30 während eines Stillstands des Oberwerkzeugs 4 gegenüber dem Unterwerkzeug 5 den zweiten Sicherungsraum 31 und den dritten Sicherungsraum 51 überwacht. Bei einem Eindringen des Werkstücks 50 in den zweiten Sicherungsraum 31 und/oder in den dritten Sicherungsraum 51 kann die Sicherheitssteuerung 17 ein Signal zur Inbetriebnahme der Deformationseinrichtung 1 bereitstellen, so dass allein über die Zufuhr des Werkstücks 50 in den zweiten Sicherungsraum 31 und/oder in den dritten Sicherungsraum 51 ein nachfolgender Deformationsvorgang für das Werkstück 50 bewirkt werden kann.

Alternativ kann vorgesehen werden, dass erste eine Abfolge eines Eindringen eines Gegenstands in den zweiten Sicherungsraum 31 und/oder in den dritten Sicherungsraum 51 und ein nachfolgendes Entfernen des Gegenstands aus dem zweiten Sicherungsraum 31 und/oder dem dritten Sicherungsraum 51 zu einer Bereitstellung eines Signals zur Inbetriebnahme der Deformationseinrichtung 1 durch die Sicherheitssteuerung 17 führt. Eine solche Vorgehensweise ist insbesondere dann zu bevorzugen, wenn das Werkstück 50 allein keine zuverlässige Abschwächung der Sicherheitslichtstrahlen der zweiten optischen Sicherungseinrichtung 30 gewährleisten kann (beispielsweise bei geringer Dicke oder geringer Größe des Werkstücks 50), so dass ein Eingreifen eines Bedieners mit seinen Händen in den zweiten Sicherungsraum 31 und/oder in den dritten Sicherungsraum 51 erforderlich ist, um eine Bereitstellung eines Sensorsignals durch die zweite optische Sicherungseinrichtung 30 an die Sicherheitssteuerung 17 zu bewirken. In diesem Fall ist es vorteilhaft, wenn die Abstandsverkleinerung zwischen dem Oberwerkzeug 4 und dem Unterwerkzeug 5 erst dann stattfindet, wenn der Bediener seine Hände wieder aus dem zweiten Sicherungsraum 31 und/oder dem dritten Sicherungsraum 51 entfernt hat.

Bevorzugt ist vorgesehen, dass die Abstandsverkleinerung zwischen dem Oberwerkzeug 4 und dem Unterwerkzeug 5 nur dann von der Sicherheitssteuerung 17 bewirkt wird, wenn das Eindringen und das Entfernen des Gegenstands innerhalb eines vorgebbaren Zeitintervalls erfolgt, um eventuelle Fehlbedienungen der Deformationseinrichtung 1 zu vermeiden.

Ergänzend oder alternativ kann während einer Stillstandsphase für die Relativbewegung zwischen dem Oberwerkzeug 4 und dem Unterwerkzeug 5 und einer Relativbewegung des Werkstückanschlags 15 gegenüber dem Unterwerkzeug 5 vorgesehen werden, die zweite optische Sicherungseinrichtung 30 zur Überwachung des dritten Sicherungsraums 51 zu nutzen. Die Sicherheitssteuerung 17 kann beispielsweise bei einer Unterbrechung oder Abschwächung der Sicherheitslichtstrahlen der zweiten optischen Sicherungseinrichtung 30 zu dem Ergebnis zu gelangen, dass ein Bediener in den dritten Sicherungsraum 51 eingreift, womit aufgrund der eventuell stattfindenden Annäherungsbewegung des Werkstückanschlags 15 an das Unterwerkzeug 5 eine Quetschgefahr für den Bediener besteht, so dass in diesem Fall eine Abschaltung des als Stellantrieb dienenden Hydraulikzylinders 16 stattfindet.

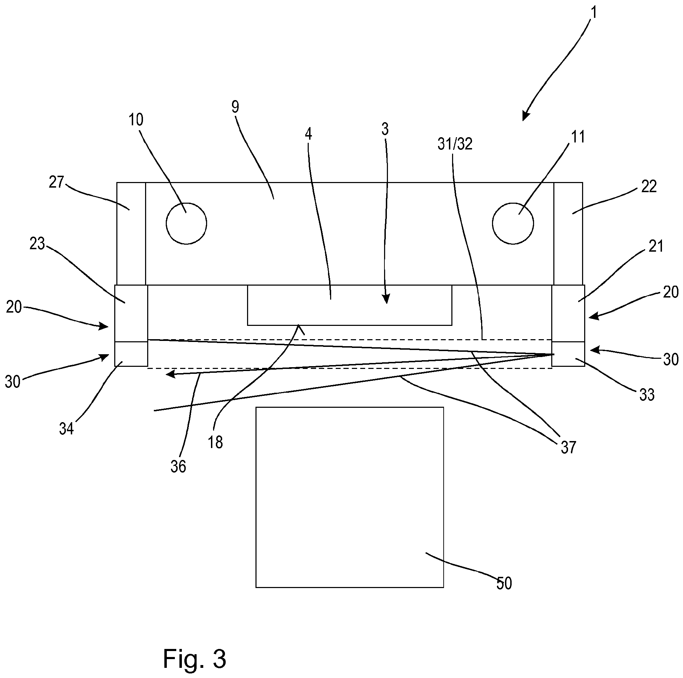

Wie aus der Darstellung der Figur 3 entnommen werden kann, ist eine optische Achse 36 der zweiten Strahlenquelle 33 in einem spitzen Winkel zu einem Abstand zwischen zweiter Strahlenquelle 33 und zweitem Lichtempfänger 34 ausgerichtet, um Reflektionen von Randlichtstrahlen 37 an der Vorderseite 18 des Oberwerkzeugs 4 zu vermeiden.

Bei der in den Figuren 1 bis 3 dargestellten Ausführungsform der Deformationseinrichtung 1 ist rein exemplarisch eine dritte optische Sicherungseinrichtung 40 zur Absicherung eines Raumbereichs zwischen einer Rückseite oder Hinterkante 41 des Unterwerkzeugs 5 und einer Vorderseite oder Vorderkante 42 des Werkstückanschlags 15 vorgesehen. Die dritte optische Sicherungseinrichtung 40 umfasst eine dritte Strahlenquelle 43 sowie einen dritten Lichtempfänger 44, die gegenüberliegend zueinander ortsfest am Maschinenrahmen 2 angeordnet sind. Dabei ist die dritte Strahlenquelle 43 zur Bereitstellung eines nicht näher dargestellten Lichtstrahls, insbesondere Laserstrahls, ausgebildet, der parallel zur Stirnfläche 7 des Unterwerkzeugs 5 ausgerichtet ist und der auf ein Sensorelement 45 des dritten Lichtempfängers 44 auftrifft, sofern kein Hindernis zwischen der dritten Strahlungsquelle 43 und dem dritten Lichtempfänger 44 angeordnet ist. Die dritte Strahlungsquelle 43 und der dritte Lichtempfänger 44 sind elektrisch in nicht näher dargestellter Weise mit der Sicherheitssteuerung 17 verbunden, die für eine wahlweise Aktivierung und Deaktivierung der dritten Strahlungsquelle und für eine Verarbeitung des vom dritten Lichtempfänger 44 bereitgestellten Sensorsignals ausgebildet ist.

Sofern bei aktivierter dritter Strahlungsquelle 43 eine Unterbrechung des optischen Pfads zwischen der dritten Strahlungsquelle 43 und dem dritten Lichtempfänger 44 vorliegt, stellt der dritte Lichtempfänger 44 nicht das Sensorsignal bereit, das ohne eine Unterbrechung des optischen Pfads auftreten müsste. Dadurch erkennt die Sicherheitssteuerung 17 eine Abweichung zwischen einem Sollwert für das Sensorsignal und dem Istwert des Sensorsignals und muss daher von einer Gefährdung eines Bedieners ausgehen, so dass zur Beseitigung des Gefährdungspotenzials eine Abschaltung der hydraulischen Versorgung für den Hydraulikzylinder 16 vorgenommen wird.

Bei geeigneter Auslegung und Anordnung der zweiten optischen Sicherungseinrichtung 30 kann auf die dritte optische Sicherungseinrichtung 40 verzichtet werden, da deren Aufgabe durch die Überwachung des dritten Sicherungsraums 51 während einer Verstellbewegung für den Werkstückanschlag 15 gegenüber dem Unterwerkzeug 5 mit Hilfe der zweiten optischen Sicherungseinrichtung 30 in synergetischer Weise wahrgenommen werden kann.

Für einen Betrieb der Deformationseinrichtung 1 kann folgende Vorgehensweise vorgesehen werden: zunächst erfolgt eine Programmierung der Deformationseinrichtung 1 mit einer speicherprogrammierbaren Steuerung (SPS) 19, die elektrisch in nicht näher dargestellter Weise mit der Sicherheitssteuerung 17 verbunden ist und die ein nicht näher dargestelltes Eingabemittel, beispielsweise eine Tastatur, zur Eingabe von Programmierbefehlen umfasst. Im Zuge der Programmierung des Deformationswerkzeugs 1 kann beispielsweise festgelegt werden, bis zu welchem Abstand das Oberwerkzeug 4 an das Unterwerkzeug 5 angenähert werden soll, um das zwischen den beiden Werkzeugen 4, 5 aufzunehmende Werkstück 50 in der gewünschten Weise zu deformieren. Ferner wird im Zuge der Programmierung auch eine Positionierung für den Werkstückanschlag 15 festgelegt, die anschließend beim Betrieb der Deformationseinrichtung 1 mit Hilfe der Steuerung 19 und des Hydraulikzylinders 16 eingestellt wird.

Bei diesem Einstellvorgang für den Werkstückanschlag 15 erfolgt eine entweder Aktivierung der dritten Strahlenquelle 43 durch die Sicherheitssteuerung 17 sowie eine Verarbeitung des Sensorsignals des dritten Lichtempfängers 44 durch die Sicherheitssteuerung 17, um bei einer Unterbrechung des optischen Pfads zwischen der dritten Strahlenquelle 43 und dem dritten Lichtempfänger 44 eine Abschaltung der hydraulischen Versorgung für den Hydraulikzylinder vornehmen zu können und damit ein Gefahrenpotenzial für einen Bediener zu beseitigen.

Ergänzend oder alternativ kann vorgesehen sein, diesen Einstellvorgang für den Werkstückanschlag 15 mit Hilfe der zweiten optischen Sicherungseinrichtung 30, die den dritten Sicherungsraum 51 überwachen kann, abzusichern und bei einem Eindringen eines Gegenstands in den dritten Sicherungsraum 51 eine Abschaltung der hydraulischen Versorgung für den Hydraulikzylinder vornehmen zu können und damit ein Gefahrenpotenzial für einen Bediener zu beseitigen.

Nach erfolgreicher Positionierung des Werkstückanschlags 15 wird - sofern diese überhaupt vorhanden ist und eingesetzt wird - die dritte Strahlenquelle 43 deaktiviert und es erfolgt keine weitere Verarbeitung des Sensorsignals des dritten Lichtempfängers 44 in der Sicherheitssteuerung 17.

Da im Zuge der Programmierung der Steuerung 19 auch Festlegungen hinsichtlich des Oberwerkzeugs 4 und des Unterwerkzeugs 5 getroffen wurden, kann die Sicherheitssteuerung 17 eine Position der beiden mit der Stelleinrichtung 22 gekoppelten optischen Sicherungseinrichtungen 20 und 30 einstellen, damit sich diese für den nachfolgenden Bearbeitungsvorgang in einer günstigen Position befinden.

In einem nachfolgenden Schritt kann nunmehr die Zuführung des Werkstücks 50 durch einen nicht dargestellten Bediener erfolgen. Exemplarisch ist vorgesehen, dass der Bediener das plattenförmig ausgebildete Werkstück 50 in horizontaler Richtung in den Arbeitsspalt 8 einschiebt, wobei das Werkstück 50 auf die Stirnfläche 7 des Unterwerkzeugs 5 aufgelegt wird und so lange in horizontaler Richtung in Richtung des Werkstückanschlags 15 in den Arbeitsspalt 8 eingeschoben wird, bis eine Stirnfläche des Werkstücks 50 am Werkstückanschlag 15 anliegt.

Bei dieser Zufuhr des Werkstücks in den Arbeitsspalt 8 erfolgt bei ausreichender Dicke des Werkstücks 50 oder bei einem Eingreifen des Bedieners in den dritten Sicherungsraum 51 eine Unterbrechung der Lichtstrahlen zwischen der zweiten Strahlenquelle 33 und dem zweiten Lichtempfänger 34, so dass die Sicherheitssteuerung 17 ein Signal an die speicherprogrammierbare Steuerung 19 zur Auswertung einer Relativbewegung des Oberwerkzeugs 4 gegenüber dem Unterwerkzeug 5 bereitstellen kann.

Beispielhaft kann vorgesehen sein, dass die Bereitstellung dieses Signals nur in dem Fall erfolgt, dass eine Unterbrechung der Sicherheitslichtstrahlen im dritten Sicherungsraum 51 nur auf das Werkstück 50 zurückgeht (was in Abhängigkeit von der Dicke des Werkstücks 50 eine entsprechende Auflösung der zweiten optischen Sicherungseinrichtung 30 erfordert). Sofern noch weitere Abschwächungen oder Unterbrechungen von Lichtstrahlen zwischen der zweiten Strahlenquelle 33 und dem zweiten Lichtempfänger 34, insbesondere im dritten Sicherungsraum 51 vorliegen, muss die Sicherheitssteuerung 17 davon ausgehen, dass sich ein nicht näher dargestellter Bediener in unzulässiger Weise im dritten Sicherungsraum 51 aufhält, so dass eine Inbetriebnahme der Deformationseinrichtung 1 hinsichtlich einer Annäherung des Oberwerkzeugs 4 an das Unterwerkzeug 5 ausgeschlossen werden muss.

Alternativ kann vorgesehen sein, dass die Bereitstellung dieses Signals bei Unterbrechung zumindest eines Teils der Sicherheitslichtstrahlen im dritten Sicherungsraum 51 erfolgt, ohne dass eine quantitative Auswertung der Abschwächung der Sicherheitslichtstrahlen der zweiten optischen Sicherungseinrichtung 30 erfolgt. In diesem Fall wird davon ausgegangen, dass der Bediener zwar mit seinen Händen in den dritten Sicherungsraum 51 eingreift, jedoch entweder aufgrund der aktivierten ersten optischen Sicherungseinrichtung 20 und/oder aufgrund einer geringen Annäherungsgeschwindigkeit zwischen Oberwerkzeug 4 und Unterwerkzeug 5 auch bei einer Abstandsverkleinerung zwischen dem Oberwerkzeug 4 und dem Unterwerkzeug 5 keine Gefahr für den Bediener vorliegt.

Bei einer weiteren alternativen Vorgehensweise ist vorgesehen, dass das Signal erst nach einer zeitlichen eng aufeinanderfolgenden Abfolge einer Unterbrechung zumindest eines Teils der Sicherheitslichtstrahlen im dritten Sicherungsraum 51 und einer nachfolgenden Freigabe dieses Teils der der Sicherheitslichtstrahlen im dritten Sicherungsraum 51 erfolgt. In diesem Fall wird davon ausgegangen, dass der Bediener zunächst mit seinen Händen in den dritten Sicherungsraum 51 eingreift, um das Werkstück 50 einzulegen, anschließend jedoch seine Hände wieder entfernt und erst dann die Abstandsverkleinerung zwischen dem Oberwerkzeug 4 und dem Unterwerkzeug 5 erfolgt.

Vorzugsweise kann - in jeweiliger Abhängigkeit von der Art der Auslösung des Arbeitstakts für die Deformationseinrichtung 1 - beispielsweise durch Programmierung der Sicherheitssteuerung 17 oder in anderer Weise ausgewählt werden, welche sicherheitsgerichteten Maßnahmen (Aktivierung erste optische Sicherungseinrichtung, Aktivierung zweite optische Sicherungseinrichtung, Vorgabe der Annäherungsgeschwindigkeit zwischen Oberwerkzeug 4 und Unterwerkzeug 5) getroffen werden, um die Sicherheit des Bedieners während des Betriebs der Deformationseinrichtung 1 zu gewährleisten.

Durch die Bereitstellung des Signals von der Sicherheitssteuerung 17 erfolgt von der Steuerung 19 unter Zwischenschaltung der Sicherheitssteuerung 17, die in Abhängigkeit von Signalen der ersten optischen Sicherungsrichtung 20 oder der zweiten optischen Sicherungseinrichtung 30 eine sicherheitsgerichtete Abschaltung der Deformationseinrichtung vornehmen kann, eine Versorgung des nicht näher dargestellten Stellantriebs (beispielsweise einer Hydraulikpumpe) für die Tragsäulen 10, 11 und das damit gekoppelte Oberwerkzeug 4 vorgenommen, um eine lineare Bewegung des Oberwerkzeugs 4 längs des Bewegungswegs 14 in Richtung des Unterwerkzeugs 5 zu bewirken.

In dieser Phase bewegen sich die beiden optischen Sicherungseinrichtungen 20 und 30 synchron zum Oberwerkzeug 4, wobei mit Hilfe der ersten optischen Sicherungseinrichtung 20 in bekannter Weise eine Absicherung des dem Arbeitsspalt 8 vorgelagerten ersten Sicherungsraums 28 erfolgt und bei Annäherung des Oberwerkzeugs 4 an das Unterwerkzeug 4 nach und nach eine Abschaltung der einzelnen Lichtquellen der ersten Strahlenquelle 21 sowie eine Ausblendung von Sensorsignalen der zugeordneten Sensorelemente 24, 25, 26 des ersten Lichtempfängers 23 in der Sicherheitssteuerung 17 erfolgt. Exemplarisch kann vorgesehen sein, dass während der Annäherung des Oberwerkzeugs 4 an das Unterwerkzeug 5 keine Aktivierung der zweiten optischen Sicherungseinrichtung 30 erfolgt und diese Aktivierung erst dann vorgenommen wird, wenn das Werkstück 50 zwischen Oberwerkzeug 4 und Unterwerkzeug 5 geklemmt wird, ohne dass bereits eine Deformation des Werkstücks 50 eingetreten ist.

Ferner kann vorgesehen werden, dass während einer Relativbewegung des Oberwerkzeugs 4 gegenüber dem Unterwerkzeug 5 eine Deaktivierung derjenigen zweiten Strahlenquelle 33 und zweitem Lichtempfänger 34 der zweiten optischen Sicherungseinrichtung 30 vorgenommen wird, die den dritten Sicherungsraum 51 überwachen, da hierdurch in der Sicherheitssteuerung 17 mehrere Kapazität für die Überwachung der übrigen zweiten Lichtempfänger 34 der zweiten optischen Sicherungseinrichtung 30 zur Verfügung gestellt werden kann.

Zudem ist exemplarisch vorgesehen, eine Aktivierung der zweiten optischen Sicherungseinrichtung 30 durch die Sicherheitssteuerung 17 vorzunehmen, sobald das Werkstück 50 zwischen dem Oberwerkzeug 4 und dem Unterwerkzeug 5 geklemmt ist und der Deformationsvorgang beginnt. Bei der Aktivierung der zweiten optischen Sicherungseinrichtung 30 werden Lichtstrahlen von der zweiten Strahlenquelle 33 derart abgegeben, dass diese den zweiten Sicherheitsraum 31 vollständig erfüllen und auf die Sensorelemente 35 des zweiten Lichtempfängers 34 auftreffen. Hierbei ist die Sicherheitssteuerung 17 für eine Auswertung eines Sensorsignals des zweiten Lichtempfänger 34 derart ausgebildet, dass Abweichungen des Sensorsignals, die einen vorgebbaren Schwellwert überschreiten, zu einer sicherheitsgerichteten, insbesondere zweikanaligen, Abschaltung einer Energieversorgung durch die Sicherheitssteuerung 17 führen, um eine Weiterbewegung des Oberwerkzeugs 4 zu verhindern. Vorzugsweise ist eine Empfindlichkeit der zweiten optischen Sicherungseinrichtung 30 und/oder der Sicherheitssteuerung 17 für die Sensorsignale des zweiten Lichtempfängers 34 derart eingestellt, dass eine Unterscheidung zwischen einem im Rahmen des Deformationsvorgangs in den Sicherheitsraum 31 einschwenkenden Werkstücks und einem manuellen Eingriff eines Bedieners in den Schutzraum 31 gewährleistet werden kann und eine Abschaltung der Bewegung des Oberwerkzeugs 4 nur im letzteren Fall vorgenommen wird.

Ferner kann rein exemplarisch vorgesehen werden, eine Abstandsvergrößerung zwischen dem Werkstückanschlag 15 und dem Unterwerkzeug 5 vorzunehmen, sobald das Werkstück 50 zwischen dem Oberwerkzeug 4 und dem Unterwerkzeug 5 geklemmt ist, um ein Verklemmen des Werkstücks 50 mit dem Werkstückanschlag 15 während des Deformationsvorgangs zu vermeiden.

Gegebenenfalls kann zusätzlich vorgesehen sein, den Verbund aus den beiden optischen Sicherungseinrichtungen 20 und 30 mit Hilfe der zugeordneten Stelleinrichtungen 22, 27 aus derjenigen Position, die während der Annäherung des Oberwerkzeugs 4 an das Unterwerkzeug 5 bis zum Klemmen des Werkstücks 50 eingenommen wurde, während des weiteren Deformationsvorgangs für das Werkstück 50 beispielsweise in vertikaler Richtung nach oben und somit gegen die Schließrichtung des Oberwerkzeugs 4 zu verlagern, um eine zuverlässige Überwachung eines höher gelegenen Sicherheitsraums 31 zu ermöglichen.

Nach erfolgter Auslösung des Arbeitstakts für die Deformationseinrichtung 1, der zu der Abstandsverkleinerung zwischen dem Oberwerkzeug 4 und dem Unterwerkzeug 5 führt, kann unabhängig von der Art der Auslösung ein Zwischenstopp für die Abstandsverkleinerung zwischen dem Oberwerkzeug 4 und dem Unterwerkzeug 5 mit programmierbarer Dauer kurz über dem Klemmpunkt für das Werkstück 50 vorgesehen werden.

Beispielhaft erfolgt der Zwischenstopp, wenn eine resultierende Spaltweite (aktuelle Größe des Arbeitsspalts abzüglich Werkstückdicke) kleiner als 6mm ist, um die Positionierung des Werkstücks 50 zu ermöglichen, bevor das Werkstück 50 im Zuge der weiteren Annäherungsbewegung zwischen Oberwerkzeug 4 und Unterwerkzeug 5 geklemmt wird.

Vorzugsweise ist ab dem Zwischenstopp eine Deaktivierung der ersten optischen Sicherungseinrichtung vorgesehen, da davon ausgegangen wird, dass kein Eingreifen des Bedieners in den Arbeitsspalt 8 mehr erfolgen kann.

Ferner ist nach dem Ende des Zwischenstopps, insbesondere ab dem Erreichen des Klemmpunkts, eine Aktivierung der zweiten optischen Sicherungseinrichtung 30 vorzusehen, da ab dem Erreichen des Klemmpunkts für das Werkstück 50 die Umformbewegung für das Werkstück 50 beginnt, so dass für den nunmehr erfolgenden Biegehub der zweite Sicherungsraum 31 durch den Bediener freigegeben sein muss.

Sofern nach dem Zwischenstopp davon auszugehen ist, dass die zweite optische Sicherungseinrichtung durch das Werkstück verdeckt wird, wie dies beispielsweise bei Herstellen eines kastenförmigen Werkstücks der Fall sein kann, erfolgt eine nachfolgende Hubauslösung mit einem vom Bediener während des Deformationsvorgangs fortdauernd zu betätigenden Fusspedal und einer reduzierten Deformationsgeschwindigkeit.

## Patentansprüche

1. Deformationseinrichtung (1) mit einem Maschinenrahmen (2), an dem ein Oberwerkzeug (4) und ein Unterwerkzeug (5) angeordnet sind, von denen wenigstens eines längs eines Bewegungswegs (14) relativbeweglich am Maschinenrahmen (2) aufgenommen ist, wobei einander gegenüberliegend angeordnete Stirnflächen (6, 7) des Oberwerkzeugs (4) und des Unterwerkzeugs (5) einen größenvariablen Arbeitsspalt (8) ausbilden und wobei dem Oberwerkzeug (4) oder dem Unterwerkzeug (5) eine erste optische Sicherungseinrichtung (20) zugeordnet ist, die zur Absicherung eines an den Arbeitsspalt (8) angrenzenden, insbesondere quaderförmigen, ersten Sicherungsraums (28) ausgebildet ist und die eine erste Strahlenquelle (21) zur Bereitstellung von ersten Sicherungslichtstrahlen sowie einen ersten Lichtempfänger (23) zum Empfang der ersten Sicherungslichtstrahlen umfasst, wobei die erste Strahlenquelle (21) und der erste Lichtempfänger (23) an einander gegenüberliegenden, insbesondere in vertikaler Richtung ausgerichteten, Begrenzungsflächen des ersten Sicherungsraums (28) angeordnet sind und wobei dem Maschinenrahmen (2) oder dem Oberwerkzeug (4) eine zweite optische Sicherungseinrichtung (30) zugeordnet ist, die eine zweite Strahlenquelle (33) zur Bereitstellung von zweiten Sicherungslichtstrahlen sowie einen zweiten Lichtempfänger (34) zum Empfang der zweiten Sicherungslichtstrahlen umfasst und die zur Absicherung eines, insbesondere quaderförmigen, zweiten Sicherungsraums (31) ausgebildet ist, der einer größten Oberfläche (18) des Oberwerkzeugs (4) vorgelagert ist, so dass eine Projektion des zweiten Sicherungsraums (31) auf das Oberwerkzeug (4) zumindest einen Abschnitt des Oberwerkzeugs (4) überdeckt, wobei die zweite Strahlenquelle (33) und der zweite Lichtempfänger (34) an einander gegenüberliegenden, insbesondere in vertikaler Richtung ausgerichteten, Begrenzungsflächen des zweiten Sicherungsraums (31) angeordnet sind, **dadurch gekennzeichnet, dass** die zweite optische Sicherungseinrichtung (30) für eine Überwachung eines dritten Sicherungsraums (51) ausgebildet ist, der sich nach unten über die dem Unterwerkzeug (5) zugewandte Stirnfläche (6) des Oberwerkzeugs (4) hinaus längs des Bewegungswegs (14) in Richtung des Unterwerkzeugs (5) erstreckt, so dass eine Projektion des dritten Sicherungsraums (51) auf den Arbeitsspalt (8) zumindest einen Abschnitt des Arbeitsspalts (8) überdeckt.

2. Deformationseinrichtung (1) nach Anspruch 1, **dadurch gekennzeichnet, dass** dem relativbeweglich am Maschinenrahmen (2) angeordneten Oberwerkzeug (4) und/oder dem relativbeweglich am Maschinenrahmen (2) aufgenommen Unterwerkzeug (5) eine Antriebseinrichtung (16) zur Einleitung einer Relativbewegung längs des Bewegungswegs (14) zugeordnet ist, wobei die Antriebseinrichtung und die erste optische Sicherungseinrichtung (20) und die zweite optische Sicherungseinrichtung (30) mit einer Sicherheitssteuerung (17) verbunden sind, die für eine Ansteuerung und Abschaltung der Antriebseinrichtung (16) in Abhängigkeit von Signalen der ersten optischen Sicherungseinrichtung (28) und der zweiten optischen Sicherungseinrichtung (30) ausgebildet ist, wobei die Sicherheitssteuerung (17) für eine Ansteuerung der Antriebseinrichtung (16) zur Durchführung einer Abstandsverkleinerung von Oberwerkzeug (4) und Unterwerkzeug (5) bei Vorliegen eines vorgebbaren Abstands zwischen Oberwerkzeug (4) und Unterwerkzeug (5) und bei Eindringen eines Gegenstands (50) in den dritten Sicherungsraum (51) ausgebildet ist.

3. Deformationseinrichtung nach Anspruch 2, **dadurch gekennzeichnet, dass** die Sicherheitssteuerung (17) für eine Abschaltung der Antriebseinrichtung (16) während einer Abstandsverkleinerung von Oberwerkzeug (4) und Unterwerkzeug (5) bei Eindringen eines Gegenstands (50) in den ersten Sicherungsraum (28) oder in den zweiten Sicherungsraum (30) oder in den dritten Sicherungsraum (51) ausgebildet ist.

4. Deformationseinrichtung nach Anspruch 2 oder 3, **dadurch gekennzeichnet, dass** die Sicherheitssteuerung (17) für eine Abschaltung eines Stellantriebs (16) ausgebildet ist, mit dem ein Abstand zwischen dem Unterwerkzeug (5) und einem, insbesondere horizontal verstellbaren, Werkstückanschlag (15) eingestellt wird.

5. Deformationseinrichtung nach einem der Ansprüche 2, 3 oder 4, **dadurch gekennzeichnet, dass** das Oberwerkzeug (4) relativbeweglich am Maschinenrahmen (2) aufgenommen ist, dass die erste optische Sicherungseinrichtung (20) am Oberwerkzeug (4) angeordnet ist und dass die zweite optische Sicherungseinrichtung (30) am Maschinenrahmen (2) angeordnet ist.

6. Deformationseinrichtung nach einem der Ansprüche 2, 3 oder 4, **dadurch gekennzeichnet, dass** das Oberwerkzeug (4) relativbeweglich am Maschinenrahmen (2) aufgenommen ist, dass die erste optische Sicherungseinrichtung (20) am Oberwerkzeug (4) angeordnet ist und dass die zweite optische Sicherungseinrichtung (30) an der ersten optischen Sicherheitseinrichtung (20) angeordnet ist.

7. Deformationseinrichtung nach Anspruch 5 oder 6, **dadurch gekennzeichnet, dass** zwischen dem Oberwerkzeug (4) und der ersten optischen Sicherungseinrichtung (20) eine Einstelleinrichtung (22) angeordnet ist, die für eine Einstellung einer Position der ersten optischen Sicherungseinrichtung (20) gegenüber dem Oberwerkzeug (4) längs des Bewegungswegs (14) ausgebildet ist.

8. Deformationseinrichtung nach einem der vorhergehenden Ansprüche, **dadurch gekennzeichnet, dass** die erste optische Sicherungseinrichtung (20) und die zweite optische Sicherungseinrichtung (30) für eine Absicherung einer bedienerzugewandten Vorderseite (18, 29) des Oberwerkzeugs (4) und/oder des Unterwerkzeugs (5) ausgebildet sind.

9. Verfahren zum Betreiben einer Deformationseinrichtung (1), mit den Schritten: Überwachen eines ersten Sicherungsraums (28), der angrenzend an einen von einander gegenüberliegend angeordneten Stirnflächen (6, 7) eines Oberwerkzeugs (4) und eines Unterwerkzeugs (5) ausgebildeten größenvariablen Arbeitsspalt (8) angeordnet ist, mit einer ersten optischen Sicherungseinrichtung (20), wobei die Überwachung des ersten Sicherungsraums (28) während einer Abstandsverkleinerung zwischen dem Oberwerkzeug (4) und dem Unterwerkzeug (5) innerhalb eines vorgebbaren ersten Abstandsintervalls für einen Abstand zwischen dem Oberwerkzeug (4) und dem Unterwerkzeug (5) erfolgt und wobei die Abstandsverkleinerung bei einem Eindringen eines Gegenstands (50) in den ersten Sicherungsraum (28) beendet wird; Überwachen eines zweiten Sicherungsraums (31), der einer größten Oberfläche (18) des Oberwerkzeugs (4) vorgelagert ist und der bei einer Projektion quer zum Bewegungsweg (14) eine größte Oberfläche (18) des Oberwerkzeugs (4) zumindest teilweise überdeckt, mit einer zweiten optischen Sicherungseinrichtung (31), wobei die Überwachung des zweiten Sicherungsraums (31) während einer Abstandsverkleinerung zwischen dem Oberwerkzeug (4) und dem Unterwerkzeug (5) innerhalb eines vorgebbaren zweiten Abstandsintervalls für einen Abstand zwischen dem Oberwerkzeug (4) und dem Unterwerkzeug (5) erfolgt und wobei die Abstandsverkleinerung bei einem Eindringen eines Gegenstands (50) in den zweiten Sicherungsraum (31) beendet wird; Überwachen eines dritten Sicherungsraums (51), der dem Arbeitsspalt (8) vorgelagert ist und der den Arbeitsspalt (8) bei einer Projektion quer zum Bewegungsweg (14) zumindest teilweise überdeckt, mit der zweiten optischen Sicherungseinrichtung (30), wobei die Überwachung des dritten Sicherungsraums (51) während einer Stillstandsphase für das Oberwerkzeug (4) und das Unterwerkzeug (5) erfolgt und wobei eine Abstandsveränderung zwischen dem Oberwerkzeug (4) und dem Unterwerkzeug (5) eingeleitet wird, wenn ein Gegenstand (50) in den dritten Sicherungsraum (51) eindringt oder nach einem Eindringen in den dritten Sicherungsraum den dritten Sicherungsraum (51) verlässt und/oder wobei eine Abstandsveränderung zwischen einem Werkstückanschlag (15) gegenüber dem Oberwerkzeug (4) oder dem Unterwerkzeug (5) beendet wird, wenn ein Gegenstand in den dritten Sicherungsraum (51) eindringt.

10. Verfahren nach Anspruch 9, **dadurch gekennzeichnet, dass** eine Abstandsverkleinerung zwischen dem Oberwerkzeug (4) und dem Unterwerkzeug (5) bei Eindringen eines Gegenstands (50) in den dritten Sicherungsraum (51) nur dann eingeleitet wird, wenn ein Abstand zwischen dem Oberwerkzeug (4) und dem Unterwerkzeug (5) innerhalb eines vorgebbaren dritten Abstandsintervalls liegt.

11. Verfahren nach Anspruch 9 oder 10, **dadurch gekennzeichnet, dass** eine Abstandsverkleinerung zwischen dem Oberwerkzeug (4) und dem Unterwerkzeug (5) bei Eindringen eines Gegenstands (50) in den dritten Sicherungsraum (51) nur dann eingeleitet wird, wenn ein Abstand zwischen dem Oberwerkzeug (4) und dem Unterwerkzeug (5) innerhalb eines vorgebbaren vierten Abstandsintervalls liegt.

12. Verfahren nach Anspruch 9, 10 oder 11, **dadurch gekennzeichnet, dass** ein kleinster Abstandsbetrag des ersten Abstandsintervalls größer oder gleich einem größten Abstandsbetrag des zweiten Abstandsintervalls ist.

13. Verfahren nach Anspruch 10, **dadurch gekennzeichnet, dass** ein kleinster Abstandsbetrag des dritten Abstandsintervalls größer oder gleich einem größten Abstandsbetrag des zweiten Abstandsintervalls ist.

14. Verfahren nach Anspruch 11, **dadurch gekennzeichnet, dass** das vierte Abstandsintervall gleich dem zweiten Abstandsintervall ist.

## Claims

1. Deforming machine (1) with a machine frame (2) on which an upper tool (4) and a lower tool (5) are arranged, at least one of which is received on the machine frame (2) so as to be relatively movable along a movement path (14), wherein mutually oppositely arranged end faces (6, 7) of the upper tool (4) and of the lower tool (5) form a working gap (8) of variable size, and wherein a first optical safety light barrier (20) is associated with the upper tool (4) or the lower tool (5), which is used to protect a, in particular cuboidal, first safety space (28) located adjacent to the working gap (8) and which comprises a first beam source (21) for providing first safety light beams and a first light receiver (23) for receiving the first safety light beams, the first beam source (21) and the first light receiver (23) being arranged on mutually opposite boundary surfaces of the first safety space (28) which are aligned in particular in the vertical direction, and a second optical safety light barrier (30) being assigned to the machine frame (2) or the upper tool (4), which comprises a second beam source (33) for providing second safety light beams and a second light receiver (34) for receiving the second safety light beams and which is designed for securing a second safety space (31), in particular a cuboidal second safety space (31), which is located in front of a largest surface (18) of the upper tool (4), so that a projection of the second safety space (31) onto the upper tool (4) covers at least a section of the upper tool (4), the second beam source (33) and the second light receiver (34) being arranged on mutually opposite boundary surfaces of the second safety space (31) which are aligned in particular in the vertical direction, **characterized in that** the second optical safety light barrier (30) is designed for monitoring a third safety space (51), which extends downwards beyond the end face (6) of the upper tool (4) facing the lower tool (5) along the movement path (14) in the direction of the lower tool (5), so that a projection of the third safety space (51) onto the working gap (8) covers at least a section of the working gap (8).

2. Deforming machine (1) according to claim 1, **characterised in that** a driving mechanism (10, 11) for initiating a relative movement along the movement path (14) is associated with the upper tool (4) arranged in a relatively movable manner on the machine frame (2) and/or the lower tool (5) received in a relatively movable manner on the machine frame (2), wherein the driving mechanism (10, 11) and the first optical safety light barrier (20) and the second optical safety light barrier (30) are connected to a safety control (17), which is designed to activate and deactivate the driving mechanism (10, 11) as a function of signals from the first optical safety light barrier (28) and the second optical safety light barrier (30), the safety control (17) being designed to activate the driving mechanism (10, 11) in order to reduce the distance between the upper tool (4) and the lower tool (5) when there is a predeterminable distance between the upper tool (4) and the lower tool (5) and when an object (50) penetrates into the third safety space (51).

3. Deforming machine according to claim 2, **characterized in that** the safety control (17) is designed for switching off the driving mechanism (10, 11) during a reduction of the distance between the upper tool (4) and lower tool (5) when an object (50) penetrates into the first safety space (28) or into the second safety space (30) or into the third safety space (51).

4. Deforming machine according to claim 2 or 3, **characterised in that** the safety control (17) is designed for switching off an actuator (46) with which a distance between the lower tool (5) and a workpiece stop (15), which is in particular horizontally adjustable, is set.

5. Deforming machine according to one of the claims 2, 3 or 4, **characterized in that** the upper tool (4) is received in a relatively movable manner on the machine frame (2), **in that** the first optical safety light barrier (20) is arranged on the upper tool (4) and **in that** the second optical safety light barrier (30) is arranged on the machine frame (2).

6. Deforming machine according to one of claims 2, 3 or 4, **characterised in that** the upper tool (4) is received in a relatively movable manner on the machine frame (2), **in that** the first optical safety light barrier (20) is arranged on the upper tool (4) and **in that** the second optical safety light barrier (30) is coupled with the first optical safety light barrier (20).

7. Deforming machine according to claim 5 or 6, **characterized in that** an adjusting device (22) is arranged between the upper tool (4) and the first optical safety light barrier (20), which is designed for adjusting a position of the first optical safety light barrier (20) relative to the upper tool (4) along the movement path (14).

8. Deforming machine according to one of the preceding claims, **characterized in that** the first optical safety light barrier (20) and the second optical safety light barrier (30) are designed for securing a front side (18, 29) of the upper tool (4) and/or the lower tool (5) facing the operator.

9. Method for operating a deforming machine (1), comprising the steps: monitoring a first safety space (28), which is arranged adjacent to a working gap (8) of variable size which working gap (8) is formed by end faces (6, 7) of an upper tool (4) and a lower tool (5) arranged opposite one another, with a first optical safety light barrier (20), wherein the monitoring of the first safety space (28) during a reduction in distance between the upper tool (4) and the lower tool (5) takes place within a predeterminable first distance interval for a distance between the upper tool (4) and the lower tool (5) and wherein the reduction in distance is terminated when an object (50) enters the first safety space (28); monitoring a second safety space (31) which is located in front of a largest surface (18) of the upper tool (4) and which, in the case of a projection transverse to the movement path (14), at least partially covers a largest surface (18) of the upper tool (4), having a second optical safety light barrier (31), wherein the monitoring of the second safety space (31) during a reduction in distance between the upper tool (4) and the lower tool (5) takes place within a predeterminable second distance interval for a distance between the upper tool (4) and the lower tool (5) and wherein the reduction in distance is terminated when an object (50) enters the second safety space (31); monitoring a third safety space (51), which is located in front of the working gap (8) and which at least partially covers the working gap (8) in a projection transverse to the movement path (14), with the second optical safety light barrier (30), wherein the monitoring of the third safety space (51) takes place during a standstill phase for the upper tool (4) and the lower tool (5) and wherein a change in distance between the upper tool (4) and the lower tool (5) is initiated, when an object (50) enters the third safety space (51) or leaves the third safety space (51) after entering the third safety space and/or wherein a change in distance between a workpiece stop (15) relative to the upper tool (4) or the lower tool (5) is terminated when an object enters the third safety space (51).

10. Method according to claim 9, **characterized in that** a reduction in distance between the upper tool (4) and the lower tool (5) when an object (50) penetrates into the third safety space (51) is only initiated if a distance between the upper tool (4) and the lower tool (5) lies within a predeterminable third distance interval.

11. Method according to claim 9 or 10, **characterized in that** a reduction in the distance between the upper tool (4) and the lower tool (5) is initiated upon penetration of an object (50) into the third safety space (51) only if a distance between the upper tool (4) and the lower tool (5) lies within a predeterminable fourth distance interval.

12. Method according to claim 9, 10 or 11, **characterized in that** a smallest distance amount of the first distance interval is greater than or equal to a largest distance amount of the second distance interval.

13. Method according to claim 10, **characterized in that** a minimum distance amount of the third distance interval is greater than or equal to a maximum distance amount of the second distance interval.

14. Method according to claim 11, **characterized in that** the fourth distance interval is equal to the second distance interval.

## Revendications

1. Dispositif de déformation (1) avec un cadre de machine (2), sur lequel sont disposés un outil supérieur (4) et un outil inférieur (5), dont au moins un est reçu sur le cadre de machine (2) de manière relativement mobile le long d'une voie de déplacement (14), dans lequel des surfaces frontales (6, 7) de l'outil supérieur (4) et de l'outil inférieur (5) disposées en regard l'une de l'autre réalisent une fente de travail (8) de dimension variable et dans lequel un premier dispositif de protection optique (20), qui est réalisé pour la sécurisation d'un premier espace de protection (28), en particulier parallélépipédique, adjacent à la fente de travail (8) et qui comprend une première source de faisceaux (21) pour la fourniture de premiers faisceaux lumineux de protection ainsi qu'un premier récepteur de lumière (23) pour la réception des premiers faisceaux lumineux de protection, est associé à l'outil supérieur (4) ou l'outil inférieur (5), dans lequel la première source de faisceaux (21) et le premier récepteur de lumière (23) sont disposés sur des surfaces de délimitation du premier espace de protection (28) en regard l'une de l'autre, en particulier orientées dans la direction verticale, et dans lequel un deuxième dispositif de protection optique (30), qui comprend une deuxième source de faisceaux (33) pour la fourniture de deuxièmes faisceaux lumineux de protection ainsi qu'un deuxième récepteur de lumière (34) pour la réception des deuxième faisceaux lumineux de protection et qui est réalisé pour la sécurisation d'un deuxième espace de protection (31), en particulier parallélépipédique, qui est situé devant une surface (18) la plus grande de l'outil supérieur (4), de sorte qu'une projection du deuxième espace de protection (31) sur l'outil supérieur (4) recouvre au moins une partie de l'outil supérieur (4), est associé au cadre de machine (2), dans lequel la deuxième source de faisceaux (33) et le deuxième récepteur de lumière (34) sont disposés sur des surfaces de délimitation du deuxième espace de protection (31) en regard l'une de l'autre, en particulier orientées dans la direction verticale, **caractérisé en ce que** le deuxième dispositif de protection optique (30) est réalisé pour une surveillance d'un troisième espace de protection (51), qui s'étend vers le bas au-delà de la surface frontale (6) de l'outil supérieur (4) tournée vers l'outil inférieur (5) le long de la voie de déplacement (14) en direction de l'outil inférieur (5), de sorte qu'une projection du troisième espace de protection (51) sur la fente de travail (8) recouvre au moins une partie de la fente de travail (8).

2. Dispositif de déformation (1) selon la revendication 1, **caractérisé en ce qu'**un dispositif d'entraînement (16) pour le déclenchement d'un déplacement relatif le long de la voie de déplacement (14) est associé à l'outil supérieur (4) disposé de manière relativement mobile sur le cadre de machine (2) et/ou l'outil inférieur (5) reçu de manière relativement mobile sur le cadre de machine (2), dans lequel le dispositif d'entraînement et le premier dispositif de protection optique (20) et le deuxième dispositif de protection optique (30) sont reliés à une commande de sécurité (17), qui est réalisée pour une commande et coupure du dispositif d'entraînement (16) en fonction de signaux du premier dispositif de protection optique (30) et du deuxième dispositif de protection optique (30), dans lequel la commande de sécurité (17) est réalisée pour une commande du dispositif d'entraînement (16) pour la mise en oeuvre d'une diminution de distance de l'outil supérieur (4) et l'outil inférieur (5) en présence d'une distance pouvant être prédéfinie entre l'outil supérieur (4) et l'outil inférieur (5) et lors de la pénétration d'un objet (50) dans le troisième espace de protection (51).

3. Dispositif de déformation selon la revendication 2, **caractérisé en ce que** la commande de sécurité (17) est réalisée pour une coupure du dispositif d'entraînement (16) pendant une diminution de distance de l'outil supérieur (4) et l'outil inférieur (5) lors de la pénétration d'un objet (50) dans le premier espace de protection (28) ou dans le deuxième espace de protection (30) ou dans le troisième espace de protection (51).

4. Dispositif de déformation selon la revendication 2 ou 3, **caractérisé en ce que** la commande de sécurité (17) est réalisée pour une coupure d'un entraînement de réglage (16), avec lequel une distance entre l'outil inférieur (5) et une butée d'outil (15), en particulier mobile horizontalement, est réglée.

5. Dispositif de déformation selon l'une quelconque des revendications 2, 3 ou 4, **caractérisé en ce que** l'outil supérieur (4) est reçu de manière relativement mobile sur le cadre de machine (2), que le premier dispositif de protection optique (20) est disposé sur l'outil supérieur (4) et que le deuxième dispositif de protection optique (30) est disposé sur le cadre de machine (2).

6. Dispositif de déformation selon l'une quelconque des revendications 2, 3 ou 4, **caractérisé en ce que** l'outil supérieur (4) est reçu de manière relativement mobile sur le cadre de machine (2), que le premier dispositif de protection optique (20) est disposé sur l'outil supérieur (4) et que le deuxième dispositif de protection optique (30) est disposé sur le premier dispositif de sécurité optique (20).

7. Dispositif de déformation selon la revendication 5 ou 6, **caractérisé en ce qu'**un dispositif de réglage (22), qui est réalisé pour un réglage d'une position du premier dispositif de protection optique (20) par rapport à l'outil supérieur (4) le long de la voie de déplacement (14), est disposé entre l'outil supérieur (4) et le premier dispositif de protection optique (20).

8. Dispositif de déformation selon l'une quelconque des revendications précédentes, **caractérisé en ce que** le premier dispositif de protection optique (20) et le deuxième dispositif de protection optique (30) sont réalisés pour une sécurisation d'une face avant (18, 29) de l'outil supérieur (4) et/ou de l'outil inférieur (5) tournée vers l'utilisateur.

9. Procédé pour faire fonctionner un dispositif de déformation (1), avec les étapes : de surveillance d'un premier espace de protection (28), qui est disposé de manière adjacente à une fente de travail (8) de dimension variable réalisée par les surfaces frontales (6, 7) d'un outil supérieur (4) et d'un outil inférieur (5) disposées en regard l'une de l'autre, avec un premier dispositif de protection optique (20), dans lequel la surveillance du premier espace de protection (28) pendant une diminution de distance entre l'outil supérieur (4) et l'outil inférieur (5) s'effectue à l'intérieur d'un premier intervalle de distance pouvant être prédéfini pour une distance entre l'outil supérieur (4) et l'outil inférieur (5) et dans lequel la diminution de distance est terminée lors d'une pénétration d'un objet (50) dans le premier espace de protection (28) ; de surveillance d'un deuxième espace de protection (31), qui est situé en amont d'une surface (18) la plus grande de l'outil supérieur (4) et qui lors d'une projection transversalement par rapport à la voie de déplacement (14) recouvre au moins en partie une surface (18) la plus grande de l'outil supérieur (4), avec un deuxième dispositif de protection optique (31), dans lequel la surveillance du deuxième espace de protection (31) pendant une diminution de distance entre l'outil supérieur (4) et l'outil inférieur (5) s'effectue à l'intérieur d'un deuxième intervalle de distance pouvant être prédéfini pour une distance entre l'outil supérieur (4) et l'outil inférieur (5) et dans lequel la diminution de distance est terminée lors d'une pénétration d'un objet (50) dans le deuxième espace de protection (31) ; de surveillance d'un troisième espace de protection (51), qui est situé en amont de la fente de travail (8) et qui recouvre au moins en partie la fente de travail (8) lors d'une projection transversale par rapport à la voie de déplacement (14), avec le deuxième dispositif de protection optique (30), dans lequel la surveillance du troisième espace de protection (51) s'effectue pendant une phase d'arrêt pour l'outil supérieur (4) et l'outil inférieur (5) et dans lequel une modification de distance entre l'outil supérieur (4) et l'outil inférieur (5) est déclenchée lorsqu'un objet (50) pénètre dans le troisième espace de protection (51) ou après une pénétration dans le troisième espace de protection (51) quitte le troisième espace de protection (51) et/ou dans lequel une modification de distance entre une butée de pièce (15) par rapport à l'outil supérieur (4) ou l'outil inférieur (5) est terminée lorsqu'un objet pénètre dans le troisième espace de protection (51).

10. Procédé selon la revendication 9, **caractérisé en ce qu'**une diminution de distance entre l'outil supérieur (4) et l'outil inférieur (5) lors de la pénétration d'un objet (50) dans le troisième espace de protection (51) n'est déclenchée que lorsqu'une distance entre l'outil supérieur (4) et l'outil inférieur (5) se situe à l'intérieur d'un troisième intervalle de distance pouvant être prédéfini.

11. Procédé selon la revendication 9 ou 10, **caractérisé en ce qu'**une diminution de distance entre l'outil supérieur (4) et l'outil inférieur (5) lors de la pénétration d'un objet (50) dans le troisième espace de protection (51) n'est déclenchée que lorsqu'une distance entre l'outil supérieur (4) et l'outil inférieur (5) se situe à l'intérieur d'un quatrième intervalle de distance pouvant être prédéfini.

12. Procédé selon la revendication 9, 10 ou 11, **caractérisé en ce qu'**une valeur de distance la plus petite du premier intervalle de distance est supérieure ou égale à une valeur de distance la plus grande du deuxième intervalle de distance.

13. Procédé selon la revendication 10, **caractérisé en ce qu'**une valeur de distance la plus petite du troisième intervalle de distance est supérieure ou égale à une valeur de distance la plus grande du deuxième intervalle de distance.

14. Procédé selon la revendication 11, **caractérisé en ce que** le quatrième intervalle de distance est identique au deuxième intervalle de distance.
